# EUROPEAN PATENT APPLICATION

(11) **EP 3 136 185 A1**
(43) Date of publication of application: **01.03.2017**
(21) Application number: 16174964.3
(22) Date of filing: 17.06.2016
(51) Int. Cl.: G03G 21/20

(54) **IMAGE FORMING APPARATUS AND DEHUMIDIFYING METHOD**

(30) Priority: 25.08.2015 JP 2015165587
(71) Applicant: Oki Data Corporation, Tokyo 108-8551 (JP)
(72) Inventor: Ito, Yukio, Tokyo 108-8551 (JP)
(74) Representative: Piotrowicz, Pawel Jan Andrzej

(57) **Abstract**

An image forming apparatus for forming images to a medium, includes an apparatus housing; a temperature detection unit for detecting a temperature of a surrounding of the apparatus housing; a dehumidifying unit for dehumidifying an interior surrounded by the apparatus housing; and a dehumidifying decision unit for operating the dehumidifying unit based on a change of the detected temperature at the temperature detection unit, to certainly remove dew condensation

## Description

### Background of the Invention

### 1. Field of the Invention

This invention relates to an image forming apparatus and a dehumidifying method for the image forming apparatus.

### 2. Description of Related Art

Conventional image forming apparatuses prevent their photosensitive body from dewing by rotating a fan where a temperature measured at the atmospheric temperature sensor is lower than a reference temperature at a time that power is turned on, as disclosed in, e.g., Japanese Patent Application Publication No. 2004-61553 (A1).

With such image forming apparatuses, however, changes of temperature are not considered, so that dew condensations may not be removed.

It is therefore an object to surely remove dew condensation.

### Summary of the Invention

In according to an aspect of the invention, an image forming apparatus for forming images to a medium, includes: an apparatus housing; a temperature detection unit for detecting a temperature of a surrounding of the apparatus housing; a dehumidifying unit for dehumidifying an interior surrounded by the apparatus housing; and a dehumidifying decision unit for operating the dehumidifying unit based on a change of the detected temperature at the temperature detection unit.

### Brief Description of the Drawings

The foregoing summary, as well as the following detailed description of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown. In the drawings:
Fig. 1 is a schematic block diagram showing a structure of an image forming apparatus according to a first embodiment of the invention;
Fig. 2 is a table showing an example of history information according to the first embodiment;
Fig. 3 is a graph showing an example of temperature changes of the environment at which the image forming apparatus according to the first embodiment is installed;
Fig. 4 is a table showing an example of dehumidifying time information according to the first embodiment; and
Fig. 5 is a flowchart showing dehumidifying operation of the image forming apparatus according to the first embodiment.

### Detailed Description of Embodiments

### First Embodiment

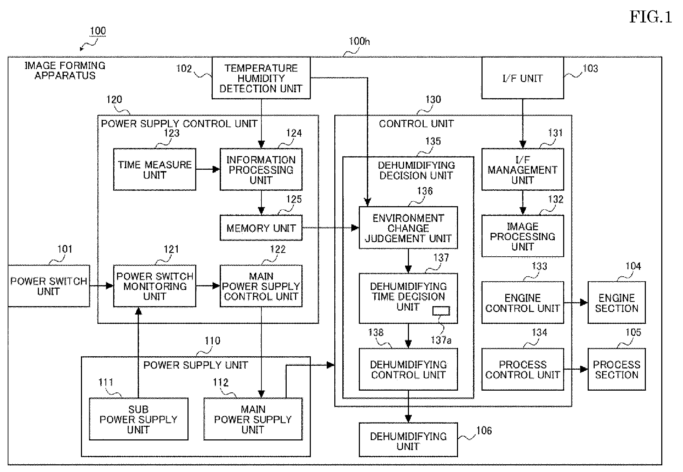

Fig. 1 is a block diagram schematically showing the structure of an image forming apparatus 100 according to the first embodiment. A dehumidifying method according to the first embodiment is executed with the image forming apparatus 100. The image forming apparatus 100 has an apparatus housing 100h, as a casing of the image forming apparatus 100, surrounding an interior of the image forming apparatus 100. The image forming apparatus 100 includes a power switch unit 101, a temperature humidity detection unit 102, an I/F unit 103, an engine section 104, a process section 105, a dehumidifying unit 106, a power supply unit 110, a power supply control unit 120 serving as a subsidiary control unit, and a control unit 130 serving as a main control unit. The image forming apparatus is an apparatus forming images to media.

The power switch unit 101 receives entry of power on and off of the image forming apparatus 100. For example, the power switch unit 101 can be realized with an input device such as a switch for power supply. The temperature humidity detection unit 102 functions as a temperature detection unit for detecting a temperature (environment temperature) of the surroundings, or the exterior of the image forming apparatus 100, and a humidity detection unit for detecting a humidity (environment humidity) of the surroundings, or the exterior of the image forming apparatus 100. For example, the temperature humidity detection unit 102 can be realized with a temperature sensor and a humidity sensor. The I/F unit 103 transmits and receives data to and from external apparatuses. For example, the I/F unit 103 receives print data (image forming data) from a host PC (personal computer) as a host apparatus. For example, the I/F unit 103 can be realized with an interface for communications such as, e.g., NIC (network interface card).

The engine unit 104 is structured of actuators such as motors, clutches, and fans for medium conveyance and apparatus cooling. The process unit 105 includes a developing unit and a fixing unit, and forms and fixes images to the media. The image forming execution unit for forming images to the media is structured of the engine unit 104 and the process unit 105.

The dehumidifying unit 106 dehumidifies the interior of the image forming apparatus 100. For example, the dehumidifying unit 106 dehumidifies the interior of the image forming apparatus 100 by heating the interior, thereby removing the dew condensation. The dehumidifying unit 106, specifically, is formed of a dehumidifying heater and removes dew condensation through heating portions to be subject to removal of dew condensation such as, e.g., the developing unit of the process unit 105 and the substrate in the image forming apparatus 100. The dehumidifying unit 106 may be formed at the plural portions.

The power supply unit 110 supplies electric power to respective portions of the image forming apparatus 100 according to the instructions of the power control unit 120. The power supply unit 110 includes a sub power supply unit 111 serving as a first power supply unit and a main power supply unit 112 serving as a second power supply unit. The sub power supply unit 111 is a power supply of a small capacity emphasizing power supply efficiency. The main power supply unit 112 is a power supply of a large capacity emphasizing power supply efficiency during a high load state.

The power supply control unit 120 manages the power supply in the image forming apparatus 100. For example, the power supply control unit 120 manages the power supply at the image forming apparatus 100 by controlling the power supply unit 110. The power control unit 120 can perform processing by receiving the power from the sub power supply unit 111 even where the image forming apparatus 100 is turned off. The power control unit 120 includes a power supply switch monitoring unit 121, a main power supply control unit 122, a time measure unit 123, an information processing unit 124, and a memory unit 125.

The power supply switch monitoring unit 121 monitors the power switch unit 101 and detects as to whether the power switch unit 101 is pushed. The power switch monitoring unit 121 provides a push notification to the main power supply control unit 122 when the power switch unit 101 is pushed. The main power supply control unit 122 controls the power supply from the main power supply unit 112. The main power supply control unit 122 controls the power supply from the main power supply unit 112 according to the mode of the image forming apparatus 100. For example, the main power supply control unit 122 controls power supply from the main power supply unit 112 to the control unit 130 according to the push notification from the power switch monitoring unit 121. More specifically, the main power supply unit 112 begins power supply to the control unit 130 at a time receiving the push notification from the power switch monitoring unit 121 while the image forming apparatus 100 is turned off. To the contrary, if receiving the push notification from the power switch monitoring unit 121 while the image forming apparatus 100 is turned on, the main power supply unit 112 stops power supply to the control unit 130.

The time measure unit 123 measures time. The image forming apparatus 100 sets the time measured at the time measure unit 123 to be the present time. The information processing unit 124 memorizes acquires the time measured at the time measure unit 123 and the temperature and humidity detected at the temperature humidity detection unit 102 at the time, and stores the combination in the memory unit 125. For example, the information processing unit 124 acquires the time from the time measure unit 123 and acquires the temperature and humidity from the temperature humidity detection unit 102 at every prescribed time (e.g., one hour), thereby memorizing the time, temperature, and humidity with relations to each other in the memory unit 125.

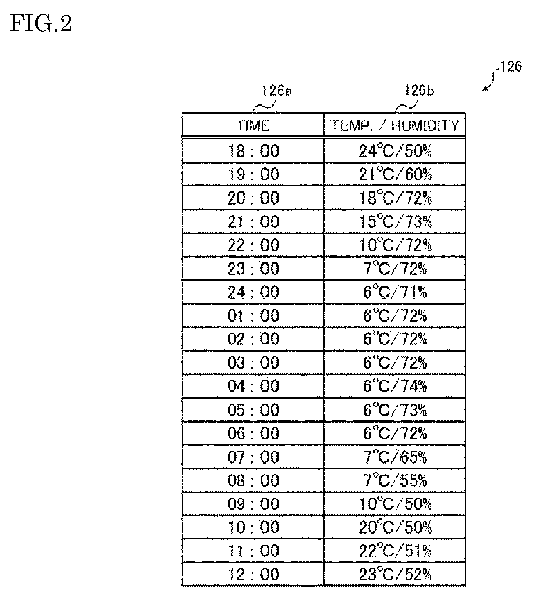

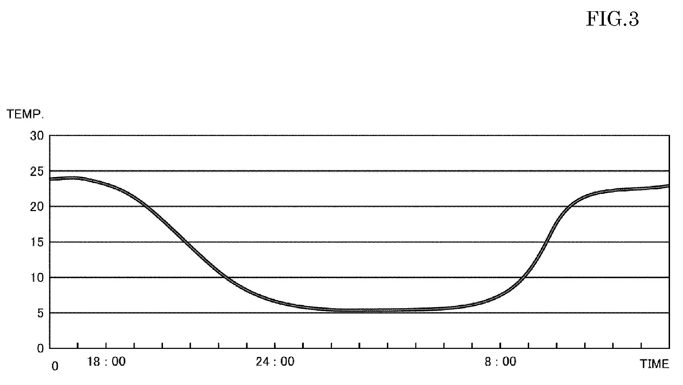

The memory unit 125 memorizes history information storing plural combinations of the time, temperature, humidity provided from the information processing unit 124. Fig. 2 is a table showing an example of the history information stored in the memory unit 125. The history information 126 is information in a table style having a time column 126a and a temperature /humidity column 126b. The time column 126a stores the time. The temperature/humidity column 126b stores the temperature and humidity measured at the time stored in the time column 126a. Fig. 2 shows an example of the temperature and humidity acquired when the temperature of the surrounding or periphery of the installed image forming apparatus 100 is changed as shown in Fig. 3. As shown in Fig. 2, the memory unit 125 memorizes the time and the temperature and humidity at the time at every hour.

The control unit 130 performs as a main controller in the image forming apparatus 100. For example, the control unit 130 controls the processing forming the images to the media in the image forming apparatus 100. The control unit 130 includes an I/F management unit 103, an image processing unit 132, an engine control unit 133, a process control unit 134, and a dehumidifying decision unit 135.

The I/F management unit 131 manages the I/F unit 103 and controls transmission and reception of data via the I/F unit 103. For example, the I/F management unit 131 receives the printing data received at the I/F unit 103 and provides the data to the image processing unit 132. The image processing unit 132 produces image data of the images to be formed at a process section 105 from the printing data provided from the I/F management unit 131. The engine control unit 133 controls an engine section 104, and the process control unit 134 controls the process section 105.

The dehumidifying decision unit 135 operates the dehumidifying unit 106 according to temperature changes detected at the temperature humidity detection unit 102. For example, the dehumidifying decision unit 135 operates the dehumidifying unit 106 based on the history information 128 stored in the memory unit 125. More specifically, the dehumidifying decision unit 135 operates the dehumidifying unit 106 in a case where a prescribed temperature change exists during a prescribed period prior to increase of the power consumption of the image forming apparatus 100. In other words, the dehumidifying decision unit 135 operates the dehumidifying unit 106 where dehumidifying is needed according to temperature change. The dehumidifying decision unit 135 includes an environment change judgment unit 136, a dehumidifying time decision unit 137, and a dehumidifying control unit 138.

The environment change judgment unit 136 judges as to whether the prescribed temperature change exists during the prescribed period of time in referring to the history information 126 stored in the memory unit 125 when the power consumption is increased in the image forming apparatus 100. For example, the environment change judgment unit 136 judges as to whether the change amount is equal to or greater than a prescribed threshold value where the change amount is set in comparing a temperature detected at the temperature humidity detection unit 102 at a time of increase of the power consumption of the image forming apparatus 100 with a temperature stored in the history information 126 during the prescribed period of time prior to the increase of the power consumption of the image forming apparatus 100. The environment change judgment unit 136 provides a notice to the dehumidifying time decision unit 137 where the prescribed temperature change exists during the prescribed period. The environment change judgment unit 136 calculates lapse time from the time at which the temperature change occurs to the time (present time) measured at the time measure unit 123 when the power consumption increases in the image forming apparatus 100, and renders the calculated lapse time included in such a notice.

The dehumidifying time decision unit 137 decides the dehumidifying time based on the lapse time notified from the environment change judgment unit 136. For example, the dehumidifying time decision unit 137 includes a dehumidifying time memory unit 137a and decides the dehumidifying time in referring to dehumidifying time information stored in the dehumidifying time memory unit 137a.

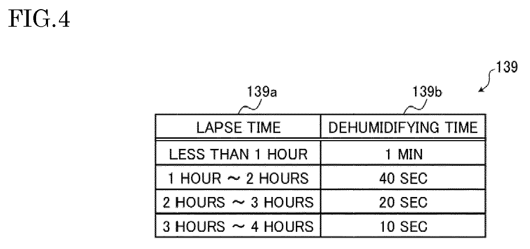

Fig. 4 is a table showing an example of the dehumidifying time information stored in the dehumidifying time memory unit 137a. The dehumidifying time information 139 has a lapse time column 139a and a dehumidifying time column 139b. The lapse time column 139a stores ranges of the lapse times. For example, in Fig. 4, stored are ranges of "less than one hour," "no less than one hour and less than two hours," "no less than two hours and less than three hours," and "no less than three hours and less than four hours." The ranges shown in Fig. 4 is merely an example, and is not limited to those. The dehumidifying time column 139b stored the dehumidifying times in the ranges indicated with the lapse time column 139a. The dehumidifying time decision unit 137 looks up the dehumidifying time information 139 and decides the dehumidifying time corresponding to the ranges of the lapse time containing the lapse time notified from the environment change judgment unit 136. The dehumidifying time decision unit 137 provides the decided dehumidifying time to the dehumidifying control unit 138.

The dehumidifying control unit 138 controls the dehumidifying unit 106. For example, the dehumidifying control unit 138 operates the dehumidifying unit 106 with the dehumidifying time provided from the dehumidifying time decision unit 137 to perform dehumidifying process.

The power supply control unit 120 and the control unit 130 as described above can be realized with a processing circuit having memories and a CPU (Central Processing Unit). The processing circuit can be made of a single circuit, a hybrid circuit, a processor with program, a processor with parallel programs, ASIC (Application Specific Integrated Circuit), FPGA (Field Programmable Gate Array), and a combination of those.

In operation, the image forming apparatus 100 operates in at least two modes. In this embodiment, a power saving mode and a power consumption mode having a larger power consumption than that of the power saving mode are set as the modes of the image forming apparatus 100. For example, the power saving mode is a mode that the power supply of the image forming apparatus 100 is turned off, whereas the power consumption mode is a mode that the power supply of the image forming apparatus 100 is turned on.

As described above, where the power supply of the image forming apparatus 100 is turned off, the power is supplied from the sub power supply unit 111 to the power switch unit 101, the temperature humidity detection unit 102, and the power supply control unit 120. With this supply, the power supply control unit 120 monitors the power switch unit 101 and acquires the environment temperature and the history of the environment temperature detected at the temperature humidity detection unit 102.

Where the power supply of the image forming apparatus 100 is turned on, in addition to the power supply from the sub power supply unit 11 to the respective abovementioned units, the power is supplied from the main power supply unit 112 to the I/F unit 103, the engine unit 104, the process unit 106, the dehumidifying unit 106, and the control unit 130. With those supplies, the dehumidifying processing in detecting the environment change, as well as printing processing in receiving the printing data, are executed, in addition to the processing at the time of power off. Accordingly, when the image forming apparatus 100 makes a shift from the power saving mode to the power consumption mode, the power consumption increases because the portions receiving the power supplies increase. The dehumidifying decision unit 135 therefore sets a time shifting from the power saving mode to the power consumption mode, or a time that the portions receiving the power supplies increase, as the time of increase of the power consumption of the image forming apparatus 100.

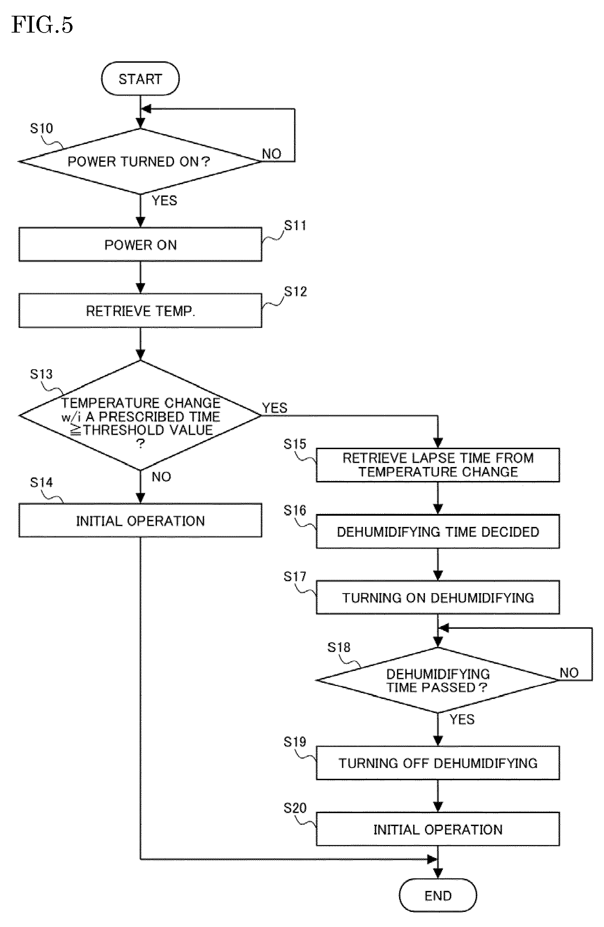

Fig. 5 is a flowchart showing dehumidifying operation of the image forming apparatus 100 according to this embodiment. Where the power switch monitoring unit 121 detects user's manipulation of the power switch unit 101 (Yes at Step S10), the main power supply control unit 122 activates the main power supply unit 112 to make the image forming apparatus 100 turned on (Step S11). The main power supply unit 122 supplies electric power from the main power supply unit 122 to the control unit 130. With this power supply, the control unit 130 is activated.

Subsequently, the environment change judgment unit 136 acquires the temperature at the time of power on, or namely the temperature at the time of increase of the power consumption, from the temperature humidity detection unit 102 (Step S12). The environment change judgment unit 136 at that time acquires the present time from the time measure unit 123 of the power supply control unit 120. The environment change judgment unit 136 compares the temperature at the time of power on with the temperature stored in the history information 126 stored in the memory unit 125, and judges as to whether the temperature change amount in a prescribed period prior to the present time (e.g., five hours) is equal to or greater than the prescribed threshold value (e.g., 10 degrees Celsius) (Step S13).

For example, in a case where the power is turned on at "8:00," the temperature at the time of power on is "7 degrees Celsius" as shown in Fig. 2. The environment change judgment unit 136 compares this temperature with the temperature history of the past five hours stored in the memory unit 125. In this situation, the environment change judgment unit 136 confirms the respective differences between the temperature at the time of power on and the temperatures at every hours up to "3:00." Because the temperature change amount herein is maximum "one degree Celsius," the environment change judgment unit 136 judges that the temperature change amount in the prescribed period is less than the prescribed threshold value.

To the contrary, for example, in a case where the power is turned on at "10:00," the temperature at the time of power on is "20 degrees Celsius" as shown in Fig. 2. In this situation, the temperature change amount to the temperature "10 degrees Celsius" at the time of "9:00" is "10 degrees Celsius," so that the environment change judgment unit 136 judges that the temperature change amount in the prescribed period is equal to or greater than the prescribed threshold value. The environment change judgment unit 136 provides, to the dehumidifying time decision unit 137, the present time and the lapse time up to the time recognizing such a temperature change (i.e., one hour in this example) as a notice.

For example, in a case where the power is turned on at "12:00," the temperature at the time of power on is "23 degrees Celsius" as shown in Fig. 2. In this situation, the temperature change amount to the temperature at the time of "9:00" is "13 degrees Celsius, so that the temperature change amount equal to or greater than the threshold value exists. In this situation, the lapse time is three hours.

The lapse time is a period between the present time and the latest time having the temperature change amount of the temperature at the time of power on equal to or greater than the threshold value. At step S 13, the environment change judgment unit 136 compares the temperature of the time of power on with the temperature history, sequentially from the temperature of the time closer to the present time, and can end the comparison processing of the temperature at the time that the temperature change amount equal to or greater than the prescribed threshold value.

If the temperature change amount in the prescribed period is less than the prescribed threshold value (No at Step S13), the processing goes to Step S14, whereas if the temperature change amount in the prescribed period is equal to greater than the prescribed threshold value (Yes at Step S13), the processing goes to Step S15.

The image forming apparatus 100 operates a normal initial activation at Step S14. For example, the engine control unit 133 and the process control unit 134 initializes the process unit 104 and the process unit 105. In this situation, the engine unit 104 and the process unit 105 are supplied with electric power from the main power supply unit 112.

At step S15, the dehumidifying time decision unit 137 acquires the lapse time from the environment change judgment unit 136. The dehumidifying time decision unit 137 looks up the dehumidifying time information 139, and decides the dehumidifying time corresponding to the acquired lapse time (Step S16). For example, if the lapse time is one hour as described above, the dehumidifying time is forty seconds, and if the lapse time is three hours, the dehumidifying time is ten seconds. The dehumidifying time decision unit 137 provides the decided dehumidifying time to the dehumidifying control unit 138.

The dehumidifying control unit 138 operates the dehumidifying unit 106 (Step S17). With this operation, the interior of the image forming apparatus 100 is warmed up and subject to removal of dew condensation. Subsequently, the dehumidifying control unit 138 judges as to whether the dehumidifying time is passed (S18). Where the dehumidifying time is passed (Yes at Step S18), the processing goes to Step S19. The dehumidifying control unit 138 stops the dehumidifying unit 106 at Step S19. The image forming apparatus 100 executes the initial operation (Step S20).

As described above, with the first embodiment, the temperature and humidity are memorized at every prescribed period of time in the memory unit 125 of the power supply control unit 120 operable with lower power consumption. The temperature change at which the image forming apparatus 100 is installed can be confirmed even where the image forming apparatus 100 is turned off. Accordingly, dew condensation state in the image forming apparatus 100 can be more exactly anticipated, so that dew condensation can be removed further surely.

The image forming apparatus according to the first embodiment makes recording of the temperature and humidity at every hour, but such recording can be done with other period of time. For example, if the recording is made at every thirty minutes, further detailed history can be recorded.

With the image forming apparatus 100 according to the first embodiment, the environment change judgment unit 136 judges as to whether the temperature change amount is equal to or greater than the threshold value at Step S 13, but may judge whether the temperature increased amount is equal to or greater than a prescribed threshold value. In general, dew condensation occurs easily where the environment temperature increases, and therefore, occurrence of dew condensation can be assumed surely by rendering the environment change judgment unit 136 judge whether the temperature increased amount in a prescribed period is equal to or greater than a prescribed threshold value.

With the first embodiment, the threshold value of the temperature change is set as constant regardless the humidity condition, but the threshold value of the temperature change may be variable according to the environment humidity. More specifically, the threshold value can be made smaller as the humidity is higher.

The dehumidifying control unit 138 may not operate to activate the dehumidifying unit 106 where the humidity at the time of power on is less than the prescribed threshold value even where the temperature change amount in the prescribed period (e.g., five hours) is equal to or greater than the prescribed threshold value. Where the humidity at the time of power on is less than the prescribed threshold value, the environment change judgment unit 136 may not calculate the temperature change amount, and the image forming apparatus 100 may begin the normal initial operation. The dehumidifying time decision unit 137 may set the dehumidifying time longer as the humidity at the time of power on is higher. For example, the dehumidifying time decision unit 137 may multiply a coefficient corresponding to the value of the humidity at the time of power on by the dehumidifying time stored in the dehumidifying time information 139. The dehumidifying time decision unit 137 may add the value of the humidity at the time of power on to the dehumidifying time stored in the dehumidifying time information 139.

As described above, in the first embodiment, the power saving mode is in the state of power off, while the power consumption mode is in the state of power on, but the modes are not limited to those examples. For example, the power saving mode may be a sleep mode while the power consumption mode may be a waiting mode or printing mode, or namely image formation mode. For example, in the sleep mode, the power is supplied from the main power supply unit 112 to the I/F unit 103 and the I/F management unit 131 of the control unit 130. During the sleep mode, for example, where the I/F unit 103 receives the printing data from the host apparatus, the power is supplied from the main power supply unit 112 to the other portions of the control unit 130, and the image forming apparatus 100 enters into the waiting mode or the printing mode. In the waiting mode or printing mode, the power may be supplied to either one of the engine section 104 and the process section 105.

As described above, in the first embodiment, the dehumidifying unit 106 is formed with a specific dehumidifying heater or heaters, but the dehumidifying unit 106 may use a heater or heaters for the fixing device not shown but contained in the process section 105. In such a situation, the heater in the fixing device at Step S17 in Fig. 5 is turned on, and an initialization processing of the heater in the fixing device may be omitted during the initial operation at Step S20. Where the heater in the fixing device is used as the dehumidifying unit 106, a fan or fans may be arranged to circulate waste heat in the image forming apparatus 100.

According to the first embodiment, based on the change of the temperature, the decision is made as to whether dehumidifying is executed, but the decision is made as to whether dehumidifying is executed according to the change of humidity instead of the change of temperature.

In the above embodiments, exemplified as a specific example of the image forming apparatus of the invention is the image forming apparatus having the printing function, but this invention is not limited to this. That is, this invention is applicable to image forming apparatuses functioning as MPFs having such as, e.g., scanning function, and facsimile function, in addition to the printing function.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. An image forming apparatus for forming images to a medium, comprising:
an apparatus housing (100h);
a temperature detection unit (102) for detecting a temperature of a surrounding of the apparatus housing;
a dehumidifying unit (106) for dehumidifying an interior surrounded by the apparatus housing; and
a dehumidifying decision unit (135) for operating the dehumidifying unit based on a change of the detected temperature at the temperature detection unit.

2. The image forming apparatus according to claim 1, further comprising:
a time measure unit (123) for measuring time;
an information processing unit (124) acquiring, at each of a prescribed period of time, the time measured at the time measure unit and the temperature detected with the temperature detection unit at the time measured at the time measure unit; and
a memory unit (125) for memorizing history information storing a plurality of combinations of the time and temperature acquired at the information processing unit,
wherein the dehumidifying decision unit (135) operates the dehumidifying unit according to the history information.

3. The image forming apparatus according to claim 2, wherein the dehumidifying decision unit operates the dehumidifying unit where a prescribed temperature change exists in a prescribed period of time prior to a time of increased power consumption of the image forming apparatus.

4. The image forming apparatus according to claim 3, wherein the time of increased power consumption of the image forming apparatus is a time at which the image forming apparatus makes transition from a power saving mode to a power consumption mode subjecting to more power consumption than the power saving mode.

5. The image forming apparatus according to claim 4, further comprising:
a first power supply unit (111) for supplying power to the time measure unit, the information processing unit, and the memory unit during the power saving mode;
a second power supply unit (112) for supplying power to the dehumidifying unit and the dehumidifying decision unit during the power consumption mode.

6. The image forming apparatus according to claim 3, further comprising a power supply unit (110) for supplying power to the respective units of the image forming apparatus,
wherein the time of increased power consumption of the image forming apparatus is a time increasing a portion of power supply from the power supply unit.

7. The image forming apparatus according to any one of claims 3 to 6, wherein the prescribed temperature change exists where a change amount between the temperature measured at the temperature detection unit (102) at the time of the increased power consumption of the image forming apparatus and the temperature stored as the history information is equal to or more than a prescribed threshold value.

8. The image forming apparatus according to any one of claims 3 to 6,, wherein the prescribed temperature change exists where an increased amount from the temperature stored in the history information to the temperature measured at the temperature detection unit (102) at the time of increased power consumption of the image forming apparatus is equal to or more than a prescribed threshold value.

9. The image forming apparatus according to claim 7 or claim 8, wherein, in referring to the history information, the dehumidifying decision unit (135) operates the dehumidifying unit for a period longer as a lapse time from the time measuring the temperature where the prescribed temperature change exists with respect to the temperature measured at the temperature detection unit (102) at the time of increased power consumption of the image forming apparatus to the time measured with the time measure unit at the time of increased power consumption of the image forming apparatus is shorter.

10. A method for dehumidifying an image forming apparatus forming images to a medium, comprising the steps of:
detecting a temperature surrounding the image forming apparatus; and
dehumidifying an interior of the image forming apparatus according to a change of the detected temperature.
